# EUROPÄISCHE PATENTSCHRIFT

(11) **EP 2 978 639 B1**
(45) Veröffentlichungstag und Bekanntmachung des Hinweises auf die Patenterteilung: **18.10.2017**
(21) Anmeldenummer: 14714632.8
(22) Anmeldetag: 24.03.2014
(51) Int. Cl.: B60R 19/12, B60R 21/0136, B60R 21/38

(54) **STOSSFÄNGERANORDNUNG FÜR EINEN PERSONENKRAFTWAGEN SOWIE PERSONENKRAFTWAGEN MIT EINER SOLCHEN STOSSFÄNGERANORDNUNG**
BUMPER ASSEMBLY FOR A MOTOR VEHICLE AND MOTOR VEHICLE WITH SUCH A BUMPER ASSEMBLY
PARE-CHOCS POUR UNE VOITURE ET VOITURE AVEC UNE TELLE PARE-CHOCS

(30) Priorität: 27.03.2013 DE 102013205490
(43) Veröffentlichungstag der Anmeldung: 03.02.2016
(73) Patentinhaber: Bayerische Motoren Werke Aktiengesellschaft, 80809 München (DE)
(72) Erfinder: FICHTINGER, Gerhard, 85630 Grasbrunn (DE); RAHE, Christian, 81677 München (DE); RIEDL, Tobias, 84347 Pfarrkirchen (DE)
(86) Internationale Anmeldenummer: PCT/EP2014/055833
(87) Internationale Veröffentlichungsnummer: WO 2014/154630

(56) Entgegenhaltungen:
- WO-A1-2005/110816
- DE-A1-102008 021 611
- DE-A1-102008 024 121
- US-B1- 6 561 301

## Beschreibung

Die Erfindung betrifft eine Stoßfängeranordnung für einen Personenkraftwagen gemäß dem Oberbegriff von Patentanspruch 1 sowie einen Personenkraftwagen mit einer solchen Stoßfängeranordnung.

Derartige Stoßfängeranordnungen für Personenkraftwagen sind aus dem Serienfahrzeugbau hinlänglich bekannt. Die Stoßfängeranordnung umfasst eine Stoßfängerverkleidung, mittels welcher ein sich in Fahrzeugquerrichtung erstreckender Biegequerträger verkleidet ist. Hierzu ist die Stoßfängerverkleidung in Fahrzeuglängsrichtung vor dem Biegequerträger angeordnet, wobei der Biegequerträger in Fahrzeuglängsrichtung nach vorne durch die Stoßfängerverkleidung überdeckt ist.

Die Stoßfängeranordnung umfasst auch wenigstens ein Versteifungselement zum Aussteifen der Stoßfängerverkleidung zumindest unterhalb des Biegequerträgers. Hierzu ist das Versteifungselement zumindest teilweise in Fahrzeuglängsrichtung unterhalb des Biegequerträgers angeordnet.

Das Versteifungselement wird üblicherweise auch als "lower stiffener", als "lower bumper stiffener" oder aber auch als "unterer Lastpfad" bezeichnet. Das Versteifungselement dient dazu, die Stoßfängerverkleidung insbesondere bei einer unfallbedingten Kraftbeaufschlagung auszusteifen. Prallt beispielsweise ein Unterschenkel eines Fußgängers, welcher durch einen Beinimpaktor simuliert werden kann, auf die Stoßfängerverkleidung auf, so sorgt das unterhalb des Biegequerträgers angeordnete Versteifungselement ("lower stiffener") dafür, dass der Fußgänger im Bereich seiner Unterschenkel mit einer entsprechenden Kraft beschleunigt und somit definiert auf eine Fronthaube bewegt wird. Ein solcher "lower stiffener" kann beispielsweise der US 2011/0127798 A1 als bekannt entnommen werden.

Darüber hinaus ist es aus dem Serienfahrzeugbau sowie aus der DE 10 2008 024 121 A1 und der WO 2005/110816 A1 bekannt, Sensoren zum Erfassen von Kollisionen des Personenkraftwagens mit Fußgängern zu verwenden. Ein solcher Sensor kann Kollisionen mit Fußgängern zuverlässig erkennen und Sicherheitseinrichtungen des Personenkraftwagens erforderliche Informationen liefern, um infolge der Kollision Schutzmaßnahmen zum Schutze des Fußgängers auszulösen. Hierzu kann beispielsweise vorgesehen sein, dass innerhalb von 10 bis 15 ms nach der Kollision die beispielsweise als aktive Motorhaube ausgebildete Fronthaube entsprechend angesteuert und durch Aktoren angehoben wird. Hierbei wird die Fronthaube in Fahrzeughochrichtung nach oben sowie beispielsweise in Fahrzeuglängsrichtung nach vorne aufgestellt, um den Abstand der Fronthaube zu einem in Fahrzeughochrichtung darunter angeordneten Motorblock zu vergrößern. Hierdurch kann wertvoller Schutzraum geschaffen werden, um die Unfallfolgen zumindest gering zu halten. Die DE 10 2008 024 121 A1 offenbart eine Stoßfängeranordnung nach dem Oberbegriff von Anspruch 1. Üblicherweise wird zum Erfassen einer solchen Kollision mit einem Fußgänger ein sich in Fahrzeugquerrichtung erstreckender Schlauch verwendet, durch welchen der Biegequerträger in Fahrzeuglängsrichtung nach vorne zumindest bereichsweise überdeckt ist. Infolge einer Kollision des Personenkraftwagens mit einem Fußgänger kommt es zu einer Deformation des Schlauchs, woraus wiederum eine Druckänderung in dem Schlauch resultiert. Diese Druckänderung kann mittels wenigstens eines Sensors erfasst werden, so dass dadurch schließlich die Kollision mit dem Fußgänger erfasst werden kann.

Derartige Kollisionserfassungsvorrichtungen sind beispielsweise aus der
DE 10 2008 021 611 A1 und der DE 10 2010 000 223 A1 bekannt.

Die Verwendung des Schlauchs führt jedoch zu einer hohen Teileanzahl und somit zu einem hohen Gewicht und zu einem hohen Bauraumbedarf des Personenkraftwagens insbesondere in dessen Frontbereich.

Es ist daher Aufgabe der vorliegenden Erfindung, eine Stoßfängeranordnung der eingangs genannten Art sowie einen Personenkraftwagen mit einer solchen Stoßfängeranordnung bereitzustellen, mittels welchen eine Kollision des Personenkraftwagens mit einem Fußgänger auf besonders gewichts- und bauraumgünstige Weise erfassbar ist.

Diese Aufgabe wird durch eine Stoßfängeranordnung mit den Merkmalen des Patentanspruchs 1 sowie durch einen Personenkraftwagen mit den Merkmalen des Patentanspruchs 9 gelöst. Vorteilhafte Ausführungen mit zweckmäßigen und nichttrivialen Weiterbildungen der Erfindung sind in den übrigen Ansprüchen angegeben.

Eine solche Stoßfängeranordnung für einen Personenkraftwagen umfasst eine Stoßfängerverkleidung zum Verkleiden eines Biegequerträgers und wenigstens ein Versteifungselement zum Aussteifen der Stoßfängerverkleidung zumindest unterhalb des Biegequerträgers. Wie eingangs beschrieben, wird ein solches Versteifungselement üblicherweise auch als "lower stiffener", als "lower bumper stiffener" oder aber auch als "unterer Lastpfad" bezeichnet.

Um nun eine etwaige Kollision des Personenkraftwagens mit einem Fußgänger auf besonders bauraum- und gewichtsgünstige Weise erfassen zu können, ist wenigstens ein mit dem Versteifungselement gekoppelter Sensor zum Erfassen einer aus einer Kollision des Kraftwagens mit einem Fußgänger resultierenden Deformation des Versteifungselements vorgesehen. Dies bedeutet, dass das ohnehin vorgesehene Versteifungselement genutzt wird, um eine Kollision des Personenkraftwagens mit einem Fußgänger zu erfassen. Ein zusätzliches Bauteil, beispielsweise ein Schlauch, ist somit zum Erfassen einer Kollision des Personenkraftwagens mit einem Fußgänger nicht vorgesehen und nicht erforderlich.

Bei der erfindungsgemäßen Stoßfängeranordnung werden das Versteifungselement und seine eingangs geschilderte Funktion, den Fußgänger im Bereich seiner Unterschenkel zu beschleunigen und diesen dadurch definiert auf eine Fronthaube des Personenkraftwagens zu befördern, genutzt, um auch die Kollision selbst zu erfassen. Der Erfindung liegt dabei die Idee zugrunde, dass es bei einer Kollision des Personenkraftwagens und insbesondere der Stoßfängeranordnung mit dem Fußgänger ohnehin zu einer unfallbedingten Kraftbeaufschlagung und einer daraus resultierenden Deformation des Versteifungselements kommt, welche mittels des wenigstens einen Sensors nun genutzt werden kann, um die Kollision zu erfassen.

Dem Versteifungselement kommt somit eine Doppelfunktion zu. Einerseits dient es zum gezielten Befördern des Fußgängers auf die Fronthaube, so dass dieser nicht unter den Personenkraftwagen gelangt, sondern gezielt auf der Fronthaube abrollen und somit geschützt werden kann. Andererseits wird das Versteifungselement genutzt, um infolge der aus der Kollision mit dem Fußgänger resultierenden Kraftbeaufschlagung des Versteifungselements die Kollision selbst zu erfassen.

Infolge der Erfassung der Kollision kann wenigstens eine Schutzmaßnahme eingeleitet werden, um den Fußgänger im weiteren Kollisionsverlauf weiter zu schützen. Im Rahmen dieser wenigstens einen Schutzmaßnahme wird beispielsweise wenigstens ein Stellglied der Fronthaube angesteuert, um die Fronthaube mittels des Stellglieds zumindest in Fahrzeughochrichtung nach oben zu verlagern, d.h. auszustellen. Wie eingangs geschildert, kann dadurch ein Abstand zwischen der Fronthaube und einem in Fahrzeughochrichtung unterhalb der Fronthaube angeordneten Antriebsaggregat des Personenkraftwagens vergrößert werden, um somit zusätzlichen Schutzraum für den Fußgänger zu schaffen.

Gemäß der Erfindung weist das Versteifungselement wenigstens eine mit einem Gas, insbesondere Luft, gefüllte und infolge der Kollision mit dem Fußgänger deformierbare Kammer auf, mit der der wenigstens eine Sensor gekoppelt ist. Hierbei ist der Sensor dazu ausgelegt, eine aus der Deformation der Kammer resultierende Druckveränderung in der Kammer zu erfassen. Mit anderen Worten resultiert aus der Deformation der Kammer eine Druckveränderung in dieser, wobei diese Druckveränderung mittels des Sensors erfassbar ist. Auf diese Weise kann die Kollision mit dem Fußgänger auf besonders einfache und gewichtsgünstige Weise und mit einer nur sehr geringen Teileanzahl rückgeschlossen werden.

Als besonders vorteilhaft hat es sich gezeigt, wenn der wenigstens eine Sensor an einem ersten Ende der Kammer mit dieser gekoppelt ist, wobei an einem in Fahrzeugquerrichtung vom ersten Ende beabstandeten, zweiten Ende der Kammer mit der Kammer wenigstens ein zweiter Sensor gekoppelt ist, mittels welchem eine aus der Deformation der Kammer resultierende Druckveränderung in der Kammer erfassbar ist. Durch die Verwendung der wenigstens zwei in Fahrzeugquerrichtung voneinander beabstandeten Sensoren kann nicht nur die Kollision mit dem Fußgänger an sich erfasst werden. Ferner ist es möglich, auch eine Stelle oder einen Bereich des Versteifungselements und somit der Stoßfängeranordnung zu erfassen, an welcher bzw. in welchem die Kollision mit dem Fußgänger stattgefunden hat. Somit kann eine Position eines Auftreffbereichs, in welchem der Fußgänger auf die Stoßfängeranordnung auftrifft, relativ zur Stoßfängeranordnung insgesamt bzw. zum Personenkraftwagen ermittelt werden, so dass die wenigstens eine Schutzmaßnahme in Abhängigkeit von der ermittelten Position durchgeführt werden kann.

Hierdurch ist es beispielsweise möglich, die Aufstellung der Fronthaube an die Position des Auftreffbereichs anzupassen. Die Fronthaube ist somit beispielsweise je nach ermittelter Position des Auftreffbereichs in unterschiedliche Stellungen mittels wenigstens eines Stellglieds bewegbar. Dadurch kann ein besonders guter Schutz des Fußgängers bereitgestellt werden.

Bei einer besonders vorteilhaften Ausführungsform der Erfindung erstreckt sich das Versteifungselement, insbesondere die Kammer, über einen zumindest überwiegenden Teil der sich in Fahrzeugquerrichtung erstreckenden Breite des Personenkraftwagens. Dadurch kann auch eine solche Kollision des Personenkraftwagens mit einem Fußgänger auf gewichts-, kosten- und bauraumgünstige Weise erfasst werden, welche in Rand- oder Eckbereichen des Personenkraftwagens geschieht. In der Folge kann der Fußgänger besonders effektiv geschützt werden.

Bei einer weiteren vorteilhaften Ausgestaltung der Erfindung ist das Versteifungselement an einem Trägerelement, insbesondere einem Längsträger, des Personenkraftwagens abgestützt. Die Stoßfängerverkleidung ist hierdurch besonders gut mittels des Versteifungselements auszusteifen, da das Versteifungselement selbst besonders stabil und fest am Trägerelement abgestützt ist. Dadurch kann der Fußgänger im Bereich seiner Unterschenkel sehr gut beschleunigt und vorteilhaft auf die Fronthaube befördert werden. Darüber hinaus kommt diese Abstützung der Erfassung der Kollision zugute, da es besonders frühzeitig bei der Kollision zu einer Deformation des Versteifungselement und einer daraus resultierenden Erfassung der Kollision kommen kann.

Zur Realisierung einer besonders festen sowie bauraumgünstigen Abstützung des Versteifungselements ist es vorgesehen, dass auch der Biegequerträger an dem Trägerelement, insbesondere dem Längsträger, abgestützt ist. Hierdurch kann der Aufwand zur Abstützung des Versteifungselements besonders gering gehalten werden.

Eine besonders vorteilhafte Versteifung der Stoßfängerverkleidung lässt sich realisieren, wenn das Versteifungselement unabhängig von der Stoßfängerverkleidung an dem Trägerelement gehalten ist. Dies bedeutet, dass beispielsweise die Stoßfängerverkleidung demontiert, das heißt vom Personenkraftwagen gelöst werden kann, ohne dadurch die Halterung des Versteifungselements am Trägerelement zu beeinträchtigen und umgekehrt. Mit anderen Worten kann die Stoßfängerverkleidung demontiert werden, ohne dass damit eine Demontage des Versteifungselements einhergehen muss.

Hierbei ist es vorzugsweise vorgesehen, dass das Versteifungselement nicht an der Stoßfängerverkleidung befestigt ist.

Bei einer weiteren Ausführungsform ist das Versteifungselement eigensteif, das heißt formstabil ausgebildet. Vorzugsweise ist das Versteifungselement dabei nicht elastisch verformbar wie beispielsweise ein Schaum. Ferner ist es vorzugsweise vorgesehen, dass das Versteifungselement aus einem von einem Schaum unterschiedlichen Material gebildet ist.

Eine weitere Ausführungsform zeichnet sich dadurch aus, dass das Versteifungselement, insbesondere vollständig, in Fahrzeuglängsrichtung von der Stoßfängerverkleidung beabstandet ist. Vorzugsweise ist das Versteifungselement. Insbesondere vollständig, in Fahrzeuglängsrichtung nach hinten von der Stoßfängerverkleidung beabstandet. Unter der "vollständigen Beabstandung" ist zu verstehen, dass das Versteifungselement die Stoßfängerverkleidung in einem undeformierten Zustand dieser nicht, das heißt an keiner Stelle, berührt.

Ferner kann vorgesehen sein, dass das Versteifungselement als separat von der Stoßfängerverkleidung ausgebildetes Bauteil ausgebildet ist. Mit anderen Worten handelt es sich bei der Stoßfängerverkleidung und dem Versteifungselement beispielsweise um zwei separate Bauteile, welche separat, das heißt unabhängig voneinander am Personenkraftwagen gehaltert, das heißt montiert werden können. Dies bedeutet, dass das Versteifungselement und die Stoßfängerverkleidung jeweils für sich betrachtet am Personenkraftwagen gehalten sind, ohne dass die Stoßfängerverkleidung für ein Halten des Versteifungselements am Personenkraftwagen und das Versteifungselement für ein Halten der Stoßfängerverkleidung am Personenkraftwagen erforderlich ist

Zur Erfindung gehört auch ein Personenkraftwagen mit einer erfindungsgemäßen Stoßfängeranordnung. Vorteilhafte Ausgestaltungen der erfindungsgemäßen Stoßfängeranordnung sind als vorteilhafte Ausgestaltungen des erfindungsgemäßen Personenkraftwagens anzusehen und umgekehrt. Infolge der Nutzung des Versteifungselements sowohl zum Beschleunigen des Fußgängers im Bereich seiner Unterschenkel als auch zum Erfassen der Kollision selbst kann ein besonders vorteilhaftes Unfallverhalten des Personenkraftwagens auf kosten-, gewichts- und bauraumgünstige Weise realisiert werden, da zusätzliche Sensoren wie beispielsweise ein Druckschlauch zum Erfassen der Fußgängerkollision nicht vorgesehen und nicht erforderlich sind.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische und perspektivische Draufsicht eines Versteifungselements zum Aussteifen einer Stoßfängerverkleidung zumindest unterhalb eines Biegequerträgers eines Personenkraftwagens;
- Fig. 2: eine schematische Querschnittsansicht einer Stoßfängeranordnung für den Personenkraftwagen, welche die Stoßfängerverkleidung und das Versteifungselement umfasst, wobei mit dem Versteifungselement gekoppelte Sensoren zum Erfassen einer aus einer Kollision des Personenkraftwagens mit einem Fußgänger resultierenden Deformation des Versteifungselements vorgesehen sind; und
- Fig. 3: eine schematische und perspektivische Ansicht eines der Sensoren, welches an einem Ende einer Kammer des Versteifungselements mit der Kammer gekoppelt ist.

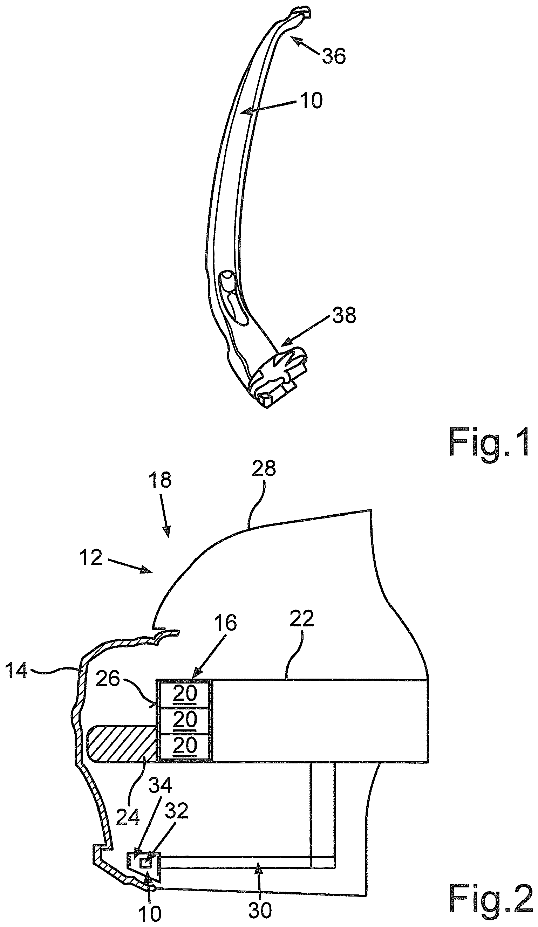

Fig. 1 zeigt in einer schematischen und perspektivischen Draufsicht ein Versteifungselement 10 für eine aus Fig. 2 erkennbare Stoßfängeranordnung 12 für einen Personenkraftwagen. Wie aus Fig. 2 erkennbar ist, umfasst die Stoßfängeranordnung 12 eine beispielsweise aus Kunststoff gebildete Stoßfängerverkleidung 14, mittels welcher ein Biegequerträger 16 des Personenkraftwagens in Fahrzeuglängsrichtung (x-Richtung) nach vorne hin verkleidet ist. Bei der Stoßfängeranordnung 12 handelt es sich somit um eine vordere bzw. an einer Front 18 des Personenkraftwagens angeordnete Stoßfängeranordnung.

Der Biegequerträger 16 ist vorliegend als Profilbauteil ausgebildet und weist drei geschlossene Hohlkammern 20 auf. Ferner erstreckt sich der Biegequerträger 16 in Fahrzeugquerrichtung (y-Richtung) und ist an zwei in Fahrzeugquerrichtung voneinander beabstandete Längsträgern abgestützt, von denen in Fig. 2 ein Längsträger 22 erkennbar ist.

Der Biegequerträger 16 dient insbesondere dazu, bei einem Frontalaufprall des Personenkraftwagens auf ein Hindernis unfallbedingte Kräfte aufzunehmen, in Fahrzeugquerrichtung zu verteilen und auf die Längsträger zu verteilen. Der Biegequerträger 16 kann dabei unter Vermittlung von jeweiligen Energieabsorptionselementen, welche auch als Crashboxen bezeichnet werden, an den Längsträgern abgestützt sein. Infolge der unfallbedingten Kraftbeaufschlagung kommt es zur Deformation der Crashboxen und gegebenenfalls der Längsträger, so dass Unfallenergie in Verformungsenergie umgewandelt wird.

In Fahrzeuglängsrichtung vor dem Biegequerträger 16 ist ein Absorptionselement in Form eines Schaumelements 24 angeordnet. Dabei ist der Biegequerträger 16 in Fahrzeuglängsrichtung nach vorne hin zumindest teilweise durch das sich in Fahrzeugquerrichtung erstreckende Schaumelement 24 überdeckt. Das Schaumelement 24 ist dabei an einer Vorderseite 26 des Biegequerträgers 16 angeordnet. Wie aus Fig. 2 ferner zu erkennen ist, ist das Schaumelement 24 in Fahrzeuglängsrichtung zwischen dem Biegequerträger 16 und der Stoßfängerverkleidung 14 angeordnet.

Kommt es beispielsweise zu einer Kollision des Personenkraftwagens über die Stoßfängeranordnung 12 mit einem Fußgänger, so kommt es zu einer unfallbedingten Verlagerung zumindest eines Bereichs der Stoßfängerverkleidung 14 in Fahrzeuglängsrichtung nach hinten auf den Stoßfänger 16 zu. Infolge dieser unfallbedingten Verlagerung wird das Schaumelement 24 komprimiert und somit verformt, so dass es Aufprallenergie in Verformungsenergie umwandeln und den Aufprall des Fußgängers auf die Stoßfängerverkleidung 14 abdämpfen kann.

Aus Fig. 2 ist auch eine schematisch dargestellte Fronthaube 28 des Personenkraftwagens erkennbar, wobei die Fronthaube 28 als Motorhaube ausgebildet ist und zum Abdecken eines Motorraums in Fahrzeughochrichtung nach oben dient. Im Motorraum ist wenigstens ein Antriebsaggregat beispielsweise in Form einer Verbrennungskraftmaschine des Personenkraftwagens angeordnet.

Wie aus Fig. 2 erkennbar ist, ist das Versteifungselement 10 in Fahrzeughochrichtung unterhalb des Biegequerträgers 16 angeordnet, wobei es den Biegequerträger 16 in Fahrzeughochrichtung nach unten hin zumindest bereichsweise überdecken kann. Vorliegend ist das Versteifungselement 10 jedoch überlappungsfrei zum Biegequerträger 16 und in Fahrzeuglängsrichtung vor dem Biegequerträger 16 angeordnet. Das Versteifungselement 10 erstreckt sich in Fahrzeugquerrichtung vorzugsweise zumindest über einen überwiegenden Teil der Breite des Personenkraftwagens und ist über Strebenelemente 30 an den Längsträgern abgestützt.

Vorliegend ist das Schaumelement 24 in Fahrzeughochrichtung nach unten hin teilweise durch das Versteifungselement 10 überdeckt, wobei das Versteifungselement 10 gegenüber dem Schaumelement 24 in Fahrzeuglängsrichtung ein Stück nach hinten hin zurückversetzt ist.

Das Versteifungselement 10 wird auch als "lower stiffener" oder als "unterer Kraftpfad" bezeichnet und dient zum Aussteifen der Stoßfängerverkleidung 14 unterhalb des Biegequerträgers 16. Das Versteifungselement 10 dient insbesondere zum Aussteifen der Stoßfängerverkleidung 14 bei einer unfallbedingten Kraftbeaufschlagung, zu der es bei einer Kollision der Stoßfängeranordnung 12 mit dem Fußgänger kommt.

Bei einer solchen Fußgängerkollision prallt beispielsweise ein Unterschenkel des Fußgängers auf die Stoßfängerverkleidung 14 auf, wobei der Unterschenkel unter Vermittlung der Stoßfängerverkleidung 14 an dem Versteifungselement 10 abgestützt. Dabei kann sich vom Unterschenkel über das Versteifungselement 10 ein Lastpfad zu den Längsträgern ausbilden, so dass das Versteifungselement 10 dafür sorgt, dass der Fußgänger im Bereich seiner Unterschenkel mit einer entsprechenden Kraft beschleunigt und somit definiert auf die Fronthaube 28 bewegt wird. Der Fußgänger kann somit im Verlauf der Kollision gezielt und definiert auf die Fronthaube 28 befördert werden und über diese abrollen, so dass er nicht unter den Personenkraftwagen gelangt.

Um ein besonders vorteilhaftes Unfallverhalten des Personenkraftwagens zu realisieren, ist es vorgesehen, eine solche Kollision des Personenkraftwagens mit dem Fußgänger zu erfassen. Infolge dieser Erfassung kann wenigstens eine Schutzmaßnahme ausgelöst werden, um den Fußgänger besonders vorteilhaft vor Unfallfolgen zu schützen. Im Rahmen dieser wenigstens einen Schutzmaßnahme ist es beispielsweise vorgesehen, die Fronthaube 28 mittels wenigstens eines Stellglieds in Fahrzeughochrichtung nach oben und gegebenenfalls in Fahrzeuglängsrichtung nach vorne aufzustellen, d.h. anzuheben. Dadurch kann bezogen auf eine Stellung der Fronthaube 28 zeitlich vor ihrem Aufstellen ein Abstand zwischen der Fronthaube 28 und dem Antriebsaggregat vergrößert werden, um so den Fußgänger vor einem Aufprall auf das Antriebsaggregat zu schützen und einen Schutzraum zum Abfangen des Fußgängers zu schaffen.

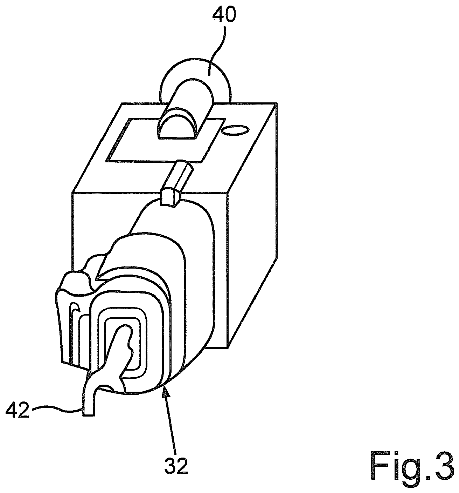

Zum Erfassen der Kollision des Personenkraftwagens mit einem Fußgänger sind nun zwei mit dem Versteifungselement 10 gekoppelte Sensoren vorgesehen, mittels welchen eine aus einer Kollision des Personenkraftwagens mit einem Fußgänger resultierende Deformation des Versteifungselements 10 erfassbar ist. Von diesen Sensoren ist dabei in Fig. 2 und 3 ein Sensor 32 erkennbar, wobei Fig. 3 den Sensor 32 in einer schematischen Perspektivansicht zeigt.

Wie aus Fig. 2 erkennbar ist, weist das Versteifungselement 10 eine sich in Fahrzeugquerrichtung erstreckende, durchgehende Kammer 34 auf. Die Kammer 34 ist dabei durch einen geschlossenen Hohlquerschnitt des als geschlossenes Profil ausgebildeten Versteifungselements 10 gebildet und mit einem Gas, insbesondere Luft, gefüllt.

Die Sensoren sind in Fahrzeugquerrichtung voneinander beabstandet angeordnet, wobei der Sensor 32 an einem ersten Ende 36 (Fig. 1) der Kammer 34 mit dieser gekoppelt ist. Der andere Sensor ist dabei an einem in Fahrzeugquerrichtung von dem ersten Ende 36 beabstandeten, zweiten Ende 38 der Kammer 34 mit der Kammer 34 gekoppelt. Unter dieser Kopplung der Sensoren ist beispielsweise zu verstehen, dass ein jeweiliger Messraum der Sensoren fluidisch mit der Kammer 34 gekoppelt ist, so dass beispielsweise ein jeweiliges Messelement der Sensoren mit dem in der Kammer 34 und somit in dem jeweiligen Messraum aufgenommenen Gas in Kontakt steht bzw. beaufschlagt ist.

Kommt es nun zu einer Kollision des Personenkraftwagens mit einem Fußgänger, infolge derer der Fußgänger auf die Stoßfängerverkleidung 14 aufprallt, so dass die Stoßfängerverkleidung 14 in Fahrzeuglängsrichtung nach hinten zurückverlagert wird und der Fußgänger unter Vermittlung der Stoßfängerverkleidung 14 an dem Versteifungselement 10 abgestützt wird, so kann daraus eine Deformation des Versteifungselements 10 und somit der Kammer 34 resultieren. Daraus resultiert wiederum eine zumindest vorübergehende Druckveränderung und insbesondere eine zumindest vorübergehenden Druckerhöhung in der Kammer 34, wobei diese Druckveränderung, insbesondere die Druckerhöhung, mittels zumindest eines der Sensoren erfassbar ist. Der wenigstens eine, die Druckveränderung und darüber die Kollision mit dem Fußgänger erfassende Sensor stellt wenigstens ein die Druckveränderung und somit die Kollision charakterisierendes Kollisionssignal bereit, welches beispielsweise an eine Recheneinrichtung eines Steuergeräts des Personenkraftwagens übermittelt wird. Beispielsweise über entsprechende Unfall-Algorithmen einer durch die Recheneinrichtung ausführbaren Auswertungssoftware sowie über Informationen über die Fahrzeuggeschwindigkeit des Personenkraftwagens aus einem Informationsnetzwerk dieses lässt sich in sehr kurzer Zeit errechnen, um welche Art von Kollision es sich handelt.

Durch die Beabstandung der Sensoren voneinander und durch einen Vergleich von jeweiligen, die Druckveränderung in der Kammer 34 charakterisierenden Kollisionssignalen können anhand von Signallaufzeiten auch Rückschlüsse über die Stelle bzw. den Bereich gezogen werden, an welcher bzw. in welchem der Fußgänger auf die Stoßfängeranordnung 12 aufgeprallt ist. Dadurch ist es beispielsweise möglich zu ermitteln, ob der Aufprall bezogen auf die Vorwärtsfahrtrichtung vorne rechts oder im Bereich der Fahrzeugmitte geschehen ist.

Dadurch kann die wenigstens eine Schutzmaßnahme, die vor allem bei einem innerstädtischen Unfall mit Ausgangsgeschwindigkeiten von 55 km/h und einer Kollisionsgeschwindigkeit im Bereich zwischen 20 km/h und 30 km/h ihre optimale Wirkung ausspielen kann, rechtzeitig durch das Steuergerät aktiviert werden. Mit anderen Worten ist es möglich, die Fronthaube 28 in besonders kurzer Zeit nach dem tatsächlich geschehenen Aufprall aufzustellen und somit den Fußgänger abzufangen.

Das zuvor und im Folgenden zum Sensor 32 Geschilderte kann ohne weiteres auch auf den anderen Sensor übertragen werden. Wie aus Fig. 3 erkennbar ist, ist der Sensor 32 beispielsweise über wenigstens ein Kopplungselement 40 fluidisch mit der Kammer 34 verbunden. Über eine aus Fig. 3 erkennbare Signalleitung 42 ist der Sensor 32 elektrisch mit dem Steuergerät verbunden, so dass das Kollisionssignal über die Signalleitung 42 an das Steuergerät übermittelt werden kann.

Dem Versteifungselement 10 kommt bei der Stoßfängeranordnung 12 eine Doppelfunktion zu. Einerseits wird das Versteifungselement 10 dazu genutzt, den Fußgänger im Bereich seiner Unterschenkel zu beschleunigen und somit den Fußgänger definiert auf die Fronthaube 28 zu befördern. Andererseits wird das Versteifungselement 10 genutzt, um über dessen Verformung und die damit einhergehende Druckveränderung in der Kammer 34 die Kollision selbst zu erfassen.

Hierbei ist beispielsweise eine Integration der als Druckluftsensoren ausgebildeten Sensoren in das Versteifungselement 10 vorgesehen, wobei die Sensoren zumindest teilweise, insbesondere zumindest überwiegend und vorzugsweise vollständig, in dem Versteifungselement 10 aufgenommen sein können.

Ein zusätzliches, ein Volumen umgebendes Sensorelement zum Erfassen der Kollision ist somit nicht vorgesehen und nicht erforderlich, so dass das Gewicht, die Teileanzahl und der Bauraumbedarf der Stoßfängeranordnung 12 besonders gering gehalten werden kann. Infolge der Integration der Sensoren in das Versteifungselement 10 kann der Bauraumbedarf besonders gering gehalten werden.

Darüber hinaus kann das Versteifungselement 10 hinsichtlich seiner Steifigkeit und/oder hinsichtlich seines Volumens, insbesondere hinsichtlich des Volumens der Kammer 34, besonders einfach und bedarfsgerecht an jeweilige Randbedingungen angepasst werden. Ein weiterer Vorteil ist, dass das Versteifungselement 10 eine wesentlich höhere Robustheit aufweist als beispielsweise ein aus Silikon gebildeter Druckschlauch zum Erfassen der Kollision, welcher gegenüber dem Versteifungselement 10 wesentlich leichter, d.h. bei wesentlich geringeren Belastungen beschädigt werden kann.

Aus Fig. 2 ist erkennbar, dass das Versteifungselement 10 unabhängig von der Stoßfängerverkleidung 14 an den Längsträgern gehalten ist. Dies bedeutet, dass beispielsweise die Stoßfängerverkleidung demontiert, das heißt vom Personenkraftwagen gelöst werden kann, ohne dadurch die Halterung des Versteifungselements 10 an den Längsträgern zu beeinträchtigen und umgekehrt. Vorliegend ist das Versteifungselement 10 nicht an der Stoßfängerverkleidung 14 befestigt ist.

Das Versteifungselement ist eigensteif, das heißt formstabil ausgebildet. Dabei ist das Versteifungselement 10 aus einem von einem Schaum unterschiedlichen Material, Kunststoff, gebildet ist. Ferner ist in Fig. 2 erkennbar, dass das Versteifungselement 10 vollständig in Fahrzeuglängsrichtung nach hinten hin von der Stoßfängerverkleidung 14 beabstandet ist.

## Patentansprüche

1. Stoßfängeranordnung (12) für einen Personenkraftwagen, mit einer Stoßfängerverkleidung (14) zum Verkleiden eines Biegequerträgers (16) und mit wenigstens einem Versteifungselement (10) zum Aussteifen der Stoßfängerverkleidung (14) unterhalb des Biegequerträgers (16), **dadurch gekennzeichnet, dass**
wenigstens ein mit dem Versteifungselement (10) gekoppelter Sensor (32) zum Erfassen einer aus einer Kollision des Personenkraftwagens mit einem Fußgänger resultierenden Deformation des Versteifungselements (10) vorgesehen ist, wobei das Versteifungselement (10) wenigstens eine mit einem Gas, insbesondere Luft, gefüllte und infolge der Kollision deformierbare Kammer (34) aufweist, mit der der wenigstens eine Sensor (32) gekoppelt ist, mittels welchem eine aus der Deformation resultierende Druckveränderung in der Kammer (34) erfassbar ist.

2. Stoßfängeranordnung (12) nach Anspruch 1,
**dadurch gekennzeichnet, dass**
der wenigstens eine Sensor (32) an einem ersten Ende (36) der Kammer (34) mit dieser gekoppelt ist, wobei an einem in Fahrzeugquerrichtung vom ersten Ende (36) beabstandeten, zweiten Ende (38) der Kammer (34) mit dieser wenigstens ein zweiter Sensor gekoppelt ist, mittels welchem eine aus der Deformation resultierende Druckveränderung in der Kammer (34) erfassbar ist.

3. Stoßfängeranordnung (12) nach einem der vorhergehenden Ansprüche,
**dadurch gekennzeichnet, dass**
sich das Versteifungselement (10), insbesondere die Kammer (34), über einen zumindest überwiegenden Teil der Breite des Personenkraftwagens erstreckt.

4. Stoßfängeranordnung (12) nach einem der vorhergehenden Ansprüche,
**dadurch gekennzeichnet, dass**
das Versteifungselement (10) an wenigstens einem Trägerelement (22), insbesondere einem Längsträger (22), des Personenkraftwagens abgestützt ist.

5. Stoßfängeranordnung (12) nach Anspruch 4,
**dadurch gekennzeichnet, dass**
der Biegequerträger (16) an dem Trägerelement (22), insbesondere dem Längsträger (22), abgestützt ist.

6. Stoßfängeranordnung (12) nach einem der Ansprüche 4 oder 5,
**dadurch gekennzeichnet, dass**
das Versteifungselement (10) unabhängig von der Stoßfängerverkleidung (14) an dem Trägerelement (22) gehalten ist.

7. Stoßfängeranordnung (12) nach einem der vorhergehenden Ansprüche,
**dadurch gekennzeichnet, dass**
das Versteifungselement (10) eigensteif ausgebildet ist.

8. Stoßfängeranordnung (12) nach einem der vorhergehenden Ansprüche,
**dadurch gekennzeichnet, dass**
das Versteifungselement (10) als separat von der Stoßfängerverkleidung (14) ausgebildetes Bauteil ausgebildet ist.

9. Personenkraftwagen mit einer Stoßfängeranordnung (12) nach einem der vorhergehenden Ansprüche.

## Claims

1. A bumper arrangement (12) for a passenger car, with a bumper fascia (14) for covering a bending cross-member (16) and with at least one reinforcement element (10) for reinforcing the bumper fascia (14) beneath the bending cross-member (16),
**characterised in that**
at least one sensor (32), coupled to the reinforcement element (10), for detecting a deformation of the reinforcement element (10) which results from a collision of the passenger car with a pedestrian is provided, the reinforcement element (10) having at least one chamber (34) which is filled with a gas, especially air, and is deformable as a result of the collision, with which chamber the at least one sensor (32) is coupled, by means of which sensor a change in pressure in the chamber (34) resulting from the deformation can be detected.

2. A bumper arrangement (12) according to Claim 1,
**characterised in that**
the at least one sensor (32) is coupled to the chamber (34) at a first end (36) thereof, with at least a second sensor being coupled to the chamber (34) at a second end (38) thereof which is spaced apart from the first end (36) in the transverse direction of the vehicle, by means of which second sensor a change in pressure in the chamber (34) resulting from the deformation can be detected.

3. A bumper arrangement (12) according to one of the preceding claims,
**characterised in that**
the reinforcement element (10), especially the chamber (34), extends over an at least predominant part of the width of the passenger car.

4. A bumper arrangement (12) according to one of the preceding claims,
**characterised in that**
the reinforcement element (10) is supported on at least one carrier element (22), especially a side member (22), of the passenger car.

5. A bumper arrangement (12) according to Claim 4,
**characterised in that**
the bending cross-member (16) is supported on the carrier element (22), especially the side member (22).

6. A bumper arrangement (12) according to one of Claims 4 or 5,
**characterised in that**
the reinforcement element (10) is held on the carrier element (22) independently of the bumper fascia (14).

7. A bumper arrangement (12) according to one of the preceding claims,
**characterised in that**
the reinforcement element (10) is formed to be inherently rigid.

8. A bumper arrangement (12) according to one of the preceding claims,
**characterised in that**
the reinforcement element (10) is formed as a component formed separately from the bumper fascia (14).

9. A passenger car with a bumper arrangement (12) according to one of the preceding claims.

## Revendications

1. Dispositif de pare-chocs (12) destiné à un véhicule de tourisme comprenant un revêtement de pare-chocs (14) permettant de revêtir une traverse de flexion (16) ainsi qu'au moins un élément de renfort (10) permettant de raidir le revêtement de pare-choc (14) au-dessous de la traverse de flexion (16),
**caractérisé en ce qu'**
il est prévu au moins un capteur (32) couplé à l'élément de renfort (10) pour détecter une déformation de cet élément de renfort (10) résultant d'une collision du véhicule de tourisme avec un piéton, l'élément de renfort (10) comportant au moins une chambre (34) remplie de gaz et en particulier d'air et pouvant être déformée suite à la collision avec laquelle le capteur (32) est couplé, de sorte qu'une modification de la pression dans la chambre (34) résultant de la déformation puisse être détectée.

2. Dispositif de pare-chocs (12) conforme à la revendication 1,
**caractérisé en ce que**
le capteur (32) est couplé à la chambre (34) à une première extrémité (36) de celle-ci, à une seconde extrémité (38) de la chambre (34) située à distance de la première extrémité (36) dans la direction transversale du véhicule, étant couplé avec cette chambre (34) au moins un second capteur permettant de détecter une modification de la pression résultant de la déformation dans la chambre (34).

3. Dispositif de pare-chocs (12) conforme à l'une des revendications précédentes,
**caractérisé en ce que**
l'élément de renfort (10) en particulier la chambre (34) s'étend sur au moins la plus grande partie de la largeur du véhicule de tourisme.

4. Dispositif de pare-chocs (12) conforme à l'une des revendications précédentes,
**caractérisé en ce que**
l'élément de renfort (10) s'appuie contre au moins un élément support (22), en particulier un support longitudinal (22) du véhicule de tourisme.

5. Dispositif de pare-chocs (12) conforme à la revendication 4,
**caractérisé en ce que**
la traverse de flexion (16) s'appuie sur l'élément support (22), en particulier le support longitudinal (22).

6. Dispositif de pare-chocs (12) conforme à l'une des revendications 4 et 5,
**caractérisé en ce que**
l'élément de renfort (10) est maintenu sur l'élément support (22) indépendamment du revêtement de pare-chocs (14).

7. Dispositif de pare-chocs (12) conforme à l'une des revendications précédentes,
**caractérisé en ce que**
l'élément de renfort (10) est intrinsèquement-rigide.

8. Dispositif de pare-choc (12) conforme à l'une des revendications précédentes,
**caractérisé en ce que**
l'élément de renfort (10) est réalisé sous la forme d'un constituant indépendant du revêtement de pare-chocs (14).

9. Véhicule de tourisme équipé d'un dispositif de pare-chocs (12) conforme à l'une des revendications précédentes.
